# EUROPEAN PATENT SPECIFICATION

(11) **EP 2 831 406 B1**
(45) Date of publication and mention of the grant of the patent: **01.09.2021**
(21) Application number: 13769938.5
(22) Date of filing: 02.04.2013
(51) Int. Cl.: F02M 67/00, F02M 23/00, F02M 55/00, F23D 11/00, F23D 17/00, F23D 1/00, F02M 61/18, F02M 63/00

(54) **INJECTION OF HEAVY AND PARTICULATE LADEN FUELS**
INJEKTION VON SCHWEREN UND PARTIKELBELADENEN BRENNSTOFFEN
INJECTION DE COMBUSTIBLES LOURDS ET CHARGÉS DE MATIÈRE PARTICULAIRE

(30) Priority: 29.03.2012 AU 2012901256
(43) Date of publication of application: 04.02.2015
(73) Proprietor: Commonwealth Scientific and Industrial Research Organisation, Campbell, ACT 2612 (AU)
(72) Inventor: WIBBERLEY, Louis, Garden Suburb, New South Wales 2289 (AU); DYER, Remy Paul, Hamilton, New South Wales 2303 (AU)
(74) Representative: Robinson, David Edward Ashdown
(86) International application number: PCT/AU2013/000337
(87) International publication number: WO 2013/142921

(56) References cited:
- EP-A2- 0 026 509
- EP-A2- 1 435 484
- WO-A1-00/28097
- GB-A- 111 249
- US-A- 4 350 103
- US-A- 4 726 760
- US-A- 4 782 794
- US-A- 5 044 552
- US-A- 5 044 552
- US-A- 5 117 782
- US-A- 5 934 206
- US-B1- 6 322 610

## Description

### FIELD OF THE INVENTION

The invention relates to the injection of particulate slurry fuels such as coal water fuels, and of other difficult to atomise and/or abrasive fuels, into diesel engines and other highly pressurised reactors or combustors.

The invention further relates to the atomisation of coal water fuels and other difficult to atomise and/or abrasive fuels using oxygen enriched blast gas into diesel engines or direct combustion turbines for the purposes of CO₂ capture.

### BACKGROUND OF THE INVENTION

Current injection technology for conventional diesel and heavy fuel oil in diesel engines employs pressure atomisation of the fuel. This involves pumping the fuel into the engine through small orifices (0.2-1 mm) at high pressure (50-200 MPa). This generates a high velocity (typically 200-400 m/s) which causes rapid jet breakup and atomisation. Breakup and atomisation occurs due to a number of effects, including the turbulence in the liquid stream leaving the injector nozzle orifices, and interaction of the high velocity liquid with the relatively dense compressed air charge in the upper part of the cylinder.

For some time there has been interest in employing coal water slurry fuels in diesel engines. The properties of coal water slurry fuels are significantly different to diesel and fuel oils as they comprise a high concentration of particles (50-60 wt% coal, 1-2% wt% coal minerals) which gives a much higher viscosity and higher surface tension.

In addition, the coal particles and mineral particles are highly abrasive. Injection of these fuels into diesel engines has given rise to a number of technical challenges:
1. Pressurising and metering the fuel to the injector nozzle(s) at the correct time and rate during each firing cycle.
2. Propelling the fuel in a finely divided state into the combustion chamber to cause mixing to provide the required rate of combustion, complete combustion and to reduce the formation of abrasive combustion residues and unburnt fuel.
3. To protect sliding and sealing surfaces in the fuel system (eg the non-return/vent valves, cut-off valve slide, nozzle slide valve) from particulate contamination which can rapidly jam sliding clearances and cause abrasive wear.
4. Minimising the velocity of the fuel across surfaces, especially valve seats and nozzles, to minimize wear and damage from both abrasion and cavitation.
5. Providing the ability to flush the fuel from the injector to prevent the formation of sludge and blockages during shut down.
6. Minimisation of parasitic load on the engine to operate the injection equipment.

Despite these issues and the very different properties of coal water slurry fuels relative to conventional fuel oils, injection of coal water slurry fuels has been successfully demonstrated in a number of demonstration programs, in particular those funded by the U.S. Department of Energy (USDOE) over 1978-1993. The most successful of these demonstrated reasonable performance of injection systems with relatively few modifications to the system used for conventional diesel engine fuel oils. The modifications demonstrated included the use of increased injection pressure, seal oil protection of sealing surfaces, carbide or ceramic valve seats, and ceramic or diamond compact nozzles.

However, whilst a modified conventional pressure atomisation equipment approach has been successfully demonstrated, valve seat wear and nozzle orifice erosion have remained problematic and likely to limit injector life to around 2,000 hours. This is significantly less than for current large engines using fuel oil, where the time between replacements of injector nozzles and injector servicing is over 16,000 hours.

Overall, the likely 2,000 hour injector life for a modified conventional pressure atomiser is considered unsatisfactory, and has thus far prevented the development of the use of coal in diesel engines beyond the R&D stage.

These technical issues, and accelerated wear of injection equipment, reduce the quality of atomisation, resulting in larger agglomerates of coal particles during the dryiqg stage of the atomised fuel. The increase in the effective particle size of the coal reduces the rate of particle heating, slows combustion, and increases the amount in unburnt char in the exhaust. Coal agglomeration also tends to increase the particle size of fly ash formed from combustion due to fusion of individual ash particles contained in the coal agglomerates. The end result of reduced atomisation quality is an increase in the amount of char and the size of the fly ash particles in the combustion gases - both cause increased wear of the cylinder and piston rings, and other problems from ring sticking, exhaust valve wear and turbocharger turbine abrasion.

US. Patent 4,569,484 discloses an injector for injecting atomised coal slurry into a diesel engine. A compressed gas atomises the fuel within the injector, employing perforated discs or a cone-shaped aspirator. Since this device mixes the slurry with high velocity air inside the atomiser, the atomiser nozzle is subject to very high velocity slurry that will cause severe erosion wear. US 5,044,552 describes a supersonic coal water slurry atomizer.

An object of the present invention is to address and at least in part alleviate one or more of the aforediscussed problems and thereby facilitate the use of coal water slurry fuel in diesel engines.

The present invention entails a concept of adopting and modifying a long discarded technology employed in early diesel engines, i.e. blast injection. Although blast injection was originally used for diesel engines, it was completely superseded by solid jet *(ie* coherent liquid jet) injection from the early 1930's mostly due the power lost in driving the compressor to provide the blast air (typically 7-8% of engine power for diesel and fuel oils). This outweighed the advantages of blast atomisation (e.g. good atomisation and mixing), and reduced hydraulic pressure waves during injection to interrupt or extend the spray duration.

Earlier blast injection systems comprised:
- An air compressor for providing an adequate supply of air at a pressure several MPa higher than the engine compression pressure via a multi-stage compressor to 5-8 MPa. At reduced engine speeds the spray valve was open for a longer period in time so that the injection air pressure was usually reduced as low as 4 MPa for idle. This prevented combustion knock resulting from too rapid injection of fuel, and it reduced the chilling effect on combustion of expansion of an excess of injection air.
- High pressure air bottles of sufficient capacity to provide a steady flow of high pressure air for injection as well as for engine starting.
- Atomisers in each engine cylinder for injecting the metered fuel by blasts of high pressure air into the combustion chamber in an adequately atomized and disbursed state. Atomisers for both liquid and coal dust fuels used a range of internal mixing arrangements, wherein the blast air and fuel is intermingled before being forced out through a nozzle. These nozzles were not designed using knowledge of choked compressible flow, despite its contemporaneous development. Their use was abandoned before isentropic flow was fully understood.
- A cam mechanism for timing and lifting the atomiser valve to control the injection process by controlling both the flow of the fuel and the atomising air.
- A fuel pump to meter and deliver to each atomiser the proper quantity of fuel in accordance with engine requirements of speed and load. With blast atomisation, the fuel pressure was mostly determined by a spring loaded cut-off valve, with an opening pressure set to be significantly greater than the peak combustion pressure in the cylinder (to pressure back flow into the fuel system).

Reference to any prior art in the specification is not, and should not be taken as, an acknowledgment or any form of suggestion that this prior art forms part of the common general knowledge or that this prior art could reasonably be expected to be ascertained, understood and regarded as relevant by a person skilled in the art.

### SUMMARY OF THE INVENTION

The present invention involves configuring an atomiser injector so that, in situ, the blast of gas impinges on and atomises the fuel in the combustion chamber (rather than within the injector assembly) in a manner that facilitates operation of the engine with a particulate slurry fuel.

The invention is defined by the scope of the claims.

There is disclosed an atomiser injector comprising:
a central tube terminating in a first outlet for emitting a jet of particulate slurry fuel along a central axis; and
structure adjacent to the central tube so as to define with the tube duct means communicating with one or more second outlets for blast gas about said first outlet, which duct means is configured to accelerate the blast gas so that it emerges from the second outlet(s) as a blast stream of supersonic velocity;
wherein adjacent the second outlet an internal face or faces of said structure are axially convergent so as to direct the emergent supersonic blast stream into the jet of particulate slurry fuel downstream of the first outlet, thereby atomising the fuel. Said structure surrounds the central tube whereby said one or more second outlets comprise an annular outlet about the first outlet, and said internal face or faces of said structure adjacent the second outlet comprise a continuous marginal face portion adjacent the second outlet. A conical or pyramidal end surface of the central tube is opposed to said continuous marginal face portion for further facilitating said directing of the emergent supersonic blast stream into the jet of particulate slurry fuel downstream of the first outlet.

In another embodiment, not according to the claimed invention, one or more oblique end surfaces of the central tube are opposed to said internal face or faces for further facilitating said directing of the emergent supersonic blast stream into the jet of particulate slurry fuel downstream of the first outlet.

Advantageously, the internal face(s) and the end surface(s) are such that in operation the angle of convergence of the blast stream with respect to send central axis is in the range 5-90°, preferably 30-85°, more preferably 40-80°.

The internal face or faces adjacent the second outlet may be at least partially curvilinear and concave in the direction of flow of the blast gas.

The internal face or faces adjacent the second outlet may alternatively or additionally be generally straight in the direction of flow of the blast gas.

The duct means may be configured to accelerate the blast gas by means of a restriction arrangement that is preferably smoothly convergent - divergent in the direction of flow of the blast gas.

In an embodiment, the first outlet is generally circular and the supersonic blast stream is of annular cross section.

Alternatively, the first outlet may be elliptical or elongate in cross section whereby the jet of particulate slurry fuel is a fan jet.

The first outlet may be an elongate slot and the one or more second outlets then comprise a pair of slots to opposite sides of, and generally parallel to, the first outlet. There is disclosed an atomiser injector, not according to the claimed invention, :
a central tube terminating in a first outlet for emitting a jet of particulate slurry fuel along a central axis; and
structure surrounding the central tube so as to define with the tube a duct communicating with a second outlet for blast gas about said first outlet, which duct is configured to accelerate the blast gas so that it emerges from the second outlet as a blast stream of supersonic velocity;
wherein said second outlet is configured so that the emergent blast stream is axially convergent onto the jet of particulate slurry fuel for confining the jet within a virtual orifice of the blast stream downstream of the first outlets, whereby to facilitate downstream atomisation of the particulate slurry fuel and to reduce wear of the first outlet by the particulate slurry fuel.

The emergent blast stream may be spaced from the jet of particulate slurry fuel laterally of the fuel's emission for the first outlet, whereby the axially convergent blast stream may be highly turbulent immediately upstream of said virtual orifice, to further facilitate atomisation of the slurry fuel.

Preferably, the virtual orifice confining the jet of particulate slurry fuel induces downstream divergence of the jet whereby to facilitate atomisation of the particulate slurry fuel.

Advantageously, the second outlet is configured so that the emergent blast stream is axially convergent onto the jet of particulate slurry fuel in part by an internal continuous marginal face portion of said structure adjacent the second outlet.

In an embodiment not according to the claimed invention the second outlet comprises an annular outlet about the first outlet.

A conical or pyramidal end surface of the central tube may be opposed to the continuous marginal face portion for further facilitating said axial convergence of the emergent supersonic blast stream onto the jet of particulate slurry fuel.

The duct may be configured to accelerate the blast gas by means of a restriction that is preferably smoothly convergent - divergent in the direction of flow of the blast gas. There is disclosed a combustion apparatus comprising:
structure defining a combustion chamber; and
a particular slurry fuel atomiser injector according to the invention, positioned and configured to inject particulate slurry fuel into the combustion chamber and to atomise the fuel with the accompanying blast stream.

In an embodiment, the combustion apparatus is configured to operate as a compression ignition or diesel engine.

There is disclosed a combustion apparatus, not according to the claimed invention, comprising:
structure defining a combustion chamber; and
an atomiser injector configured to inject a jet of particulate slurry fuel into the combustion chamber with an accompanying blast stream of gas that atomises the fuel;
wherein the atomiser fuel injector is further configured whereby the blast stream impinges on and atomises the fuel in the combustion chamber and thereby facilitates operation of the apparatus with the particulate slurry fuel. In an embodiment of this aspect, the combustion apparatus is configured to operate as a compression ignition or diesel engine.
The atomiser injector may be configured whereby the blast stream is directed about the jet of particulate slurry fuel and is convergent onto the jet for confining the jet within a virtual orifice of the blast stream downstream of the first outlet. Preferably the blast stream is spaced from the jet of particulate slurry fuel laterally of the fuel's emission whereby the axially convergent blast stream is highly turbulent immediately upstream of said virtual orifice, to further facilitate atomisation of the slurry fuel. The virtual orifice confining of the jet of particulate slurry fuel preferably induces downstream divergence of the jet whereby to facilitate atomisation of the particulate slurry fuel.

The configuration of the invention in which the blast of gas impinges on and atomises the fuel downstream of the fuel outlet, and thereby, when in situ, in the combustion chamber, is referred to herein as "external mixing", because mixing of the high velocity blast gas with the slurry jet primarily, though not necessarily exclusively, occurs outside the nozzle assembly, in contrast to the "internal mixing" of earlier blast injectors discussed above, where mixing occurred within the nozzle. The use of external mixing greatly reduces and can even substantially eliminate nozzle wear and enhances atomisation performance.

At least in one or more preferred embodiments, the present invention substantially reduces the energy penalty for providing the compressed blast gas (air or other gases) thereby allowing the benefits of blast atomisation for modern engines, and also gains other benefits that facilitate the use of particulate slurry fuels.

It is noted that slurry and liquid fuel fired boilers already use a range of supersonic atomisation devices, however, the boiler application involves firing into furnaces at near atmospheric pressure and continuously at a relatively low fuel flow rate. Intermittent operation at high peak flow rates and into high pressures substantially changes the structural design required, making existing supersonic devices unsuitable for operation on an engine.

The apparatus of the invention is highly suitable for difficult to atomise heavy fuels and/or abrasive fuels such as coal water slurries, charcoal water slurries, algal slurry fuels, emulsions, wood dust slurries and lignite slurries.

The apparatus is also highly suitable for atomising coal water fuel with oxygen enriched blast gas, as would be required for oxy-firing of a coal fired diesel engine or coal turbine when CO₂ capture is required. With this application it is desirable that the fuel does not contact the oxygen stream until inside the combustion chamber to avoid pre combustion in the nozzle.

It is envisaged that the apparatus would also be highly suitable for atomising into other high pressure chambers such as gasifiers or high pressure combustion chambers which usually operate at pressures above 1 MPa.

In one embodiment, not according to the invention, the atomiser injector includes a nozzle comprising:
a. coaxial tubes including a central tube for conveying a substantially liquid fluid from the injector through the nozzle to emerge from the central tube at the nozzle outlet,
b. an annular sleeve disposed around said central tube having a common axis with the central tube, and defining an annular passageway for the flow of a blast fluid as a means for conveying the fluid below supersonic velocity, and for causing the blast fluid to flow through said annular passageway, and a converging section following by a throat and then by a diverging section near the outlet of the annular passageway causing said blast fluid to emerge at a supersonic velocity and with reduced pressure at essentially the highest combustion chamber pressure in the engine at the end of the injection. The contour of the converging and diverging sections providing uniform change in gas velocity.

There is disclosed a method of operating a diesel engine fitted with a fuel injector configured to inject fuel into the combustion chamber of the engine with an accompanying blast of gas that atomises the fuel, which method includes injecting a particulate slurry fuel, e.g. a coal water slurry fuel, by converging the blast to impinge on the fuel in the combustion chamber whereby to atomise the fuel therein for compression ignition, wherein the blast of gas is supplied via a restructure and the gas pressure upstream of the restriction is at least allows 2:1 of the pressure in the combustion chamber, whereby the blast of gas is at a supersonic relocating. The gas pressure upstream of the restriction is at least about 30MPa.

As used herein, except where the context requires otherwise the term 'comprise' and variations of the term, such as 'comprising', 'comprises' and 'comprised', are not intended to exclude other additives, components, integers or steps.

### BRIEF DESCRIPTION OF THE DRAWINGS

The invention will be further described, by way of example only, with reference to the accompanying drawings, in which:
Figure 1 is a diagrammatic axial cross-section of an atomiser injector according to the invention;
Figure 2 is an end view of the atomiser injector depicted in Figure 1;
Figure 3 is a geometric diagram of one optimisation of the radial region A in Figure 1;
Figure 4 is a flow diagram corresponding to Figure 3 showing the slurry fuel and blast gas flows and their downstream interaction when the atomiser injector is in operation;
Figures 5 and 6 are similar diagrams to Figures 1 and 2 of a further disclosed atomiser injector;
Figures 7 and 8 are similar diagrams to Figures 1 and 2 of a further disclosed atomiser injector;
Figures 9 and 10 are similar diagrams to Figures 1 and 2 of a further disclosed atomiser injector;
Figures 11 and 12 depict modified atomiser injectors designed to increase the instability of the slurry jet prior to interaction with the supersonic blast stream;
Figures 13 and 14 depict modified atomiser injectors for providing pre-atomisation to increase the atomisation and coupling with the main supersonic blast stream;
Figures 15 and 16 depict poppet-type atomiser injectors; and
Figures 17 and 18 are schematic layouts each showing an electronic controlled blast gas and fuel injection to minimise blast gas consumption whilst ensuring uniform atomisation for the entire injection event.

### DETAILED DESCRIPTION OF EMBODIMENTS OF THE INVENTION

A preferred form of the present invention is a supersonic atomiser for injecting coal water slurry fuel into a diesel engine via intense shearing and oscillatory kinetic actions of the supersonic blast gas onto the slurry fuel once within the engine combustion chamber.

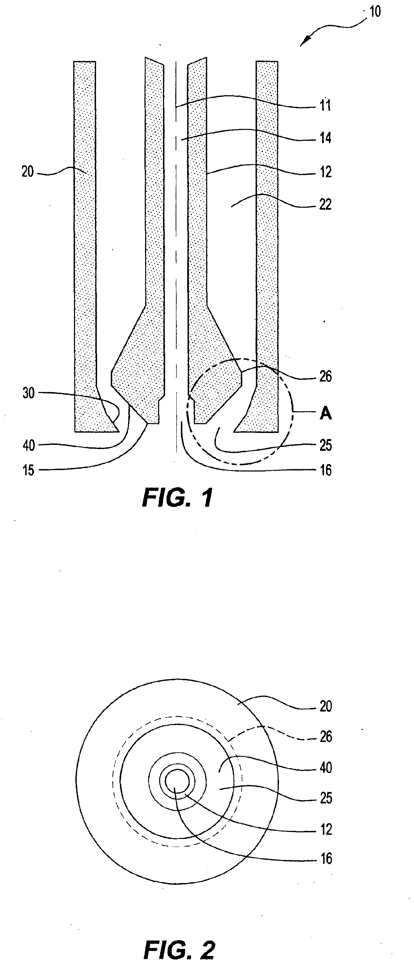

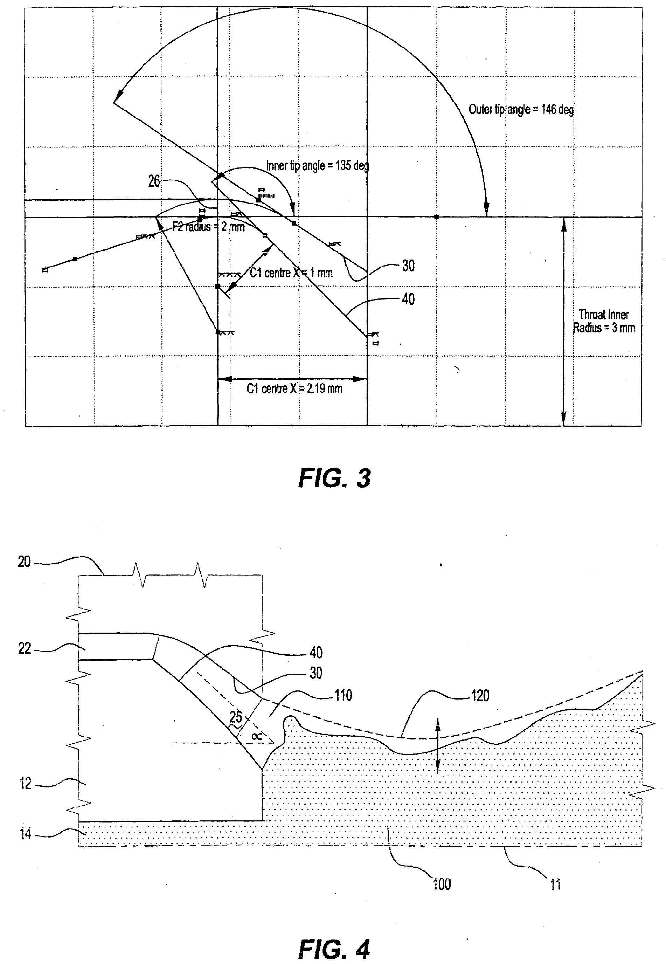

An embodiment of such an atomiser injector 10 as illustrated in Figures 1 and 2 includes a central tube 12 that defines a central passageway 14 terminating in a first or fuel outlet 16 of a nozzle 15, for emitting a jet 100 (Figure 4) of particulate coal water slurry fuel along a central axis 11.

Structure in the form of a sleeve 20 surrounds central tube 12 so as to define with the tube an annular duct 22 for blast gas, communicating with an annular outlet 25 about fuel nozzle 15. Duct 22 includes a restriction or throat 26, eg a convergent-divergent section as illustrated, to accelerate the blast gas so that it emerges from annular outlet 25 as a blast stream 110 of supersonic velocity (Figure 4).

Adjacent blast gas outlet 25 an internal continuous marginal face portion 30 of sleeve 20 forms an undercut that is axially convergent so as to direct the emergent supersonic blast stream 110 into the jet 100 of particulate slurry fuel downstream of fuel nozzle 15, for optimal atomising of the fuel. This directing of the blast gas stream 110 is further enhanced , according to the claimed invention, by a conical or pyramidal surface 40 on nozzle 15 at the end of central tube 12 about fuel outlet 16, opposed to undercut face portion 30. These opposed surfaces 30, 40 are preferably relatively inwardly divergent towards axis 11 Means for introducing blast gas to the annular duct 22 may be a compressor or steam boiler. A pump is typically provided for delivering liquid fuel to the central tube 12. This pump may cause the liquid fuel to flow through the central tube at a velocity of about 10 to about 100 m/s. The velocity of the blast fluid gas at the blast gas outlet may be in the range from about 330 to about 600 m/s.

The atomising gas may be compressed air, compressed engine exhaust gases, compressed fuel gases such as natural gas, or steam generated from a boiler advantageously using heat obtained from the engine cooling systems and engine exhaust gases, or an oxygen-exhaust gas mixture as would be relevant to oxy-firing for the purposes of CO₂ capture.

It is noted that the work required to compress the gas to the required for blast atomisation is approximately proportional to the pressure ratio achieved, and therefore the work to provide the additional compression (to say 30 MPa for a diesel engine application) over that used in earlier engine blast atomisers (around 5-6 MPa) is relatively small. This is more than compensated by the more effective use of supersonic blast gas in achieving atomisation, which allows a smaller mass of blast gas to be used. In general, the pressure of the gas upstream of the restriction 26 should be at least about 2:1 of the pressure in the chamber into which the blast stream 110 is injected, for overall supersonic flow to be achieved. At an actual ratio of 2:1, oscillation over the range 1.85 to 2.15 is believed to be acceptable.

The converging-diverging section 26 is constructed so that the blast gas is accelerated to supersonic velocities before leaving the injector and intercepting the fuel jet. The flow is not supersonic everywhere in its cross-section but varies both radially and locally and oscillates in its local velocity. The diverging section and the throat may have an area ratio in the range of about 1.3 to about 3, for example about 1.8. For achieving a high degree of atomisation it is required to provide a high momentum flux for the blast gas relative to that of the coal water slurry jet. The momentum flux is defined as the product of the blast gas density and its velocity squared. As the pressure in diesel engines at the time of injection is at least 5 MPa and that of the blast gas greater than 15 MPa, the gas density is much higher than for boiler applications, which substantially reduces the amount of blast gas required, including that required for subsonic blast atomisers used for the early diesel engines.

The design of the atomiser can be achieved using standard physical and thermodynamic equations for compressible flow, and may avoid taking into account the changing pressure in the engine cylinder during the duration of the injection event for the particular fuel, so long as sufficient absolute pressure ratio is available to achieve the design conditions in the blast gas divergent section at the highest expected chamber pressure.

Figure 3 is a geometric diagram showing one optimisation of the radial region A in Figure 1, while Figure 4 is a flow diagram corresponding to Figure 3 showing the slurry fuel and blast gas flows and their downstream interaction when the atomiser injector is in operation.

The externally convergent flow of the blast gas acts as a continually renewed "virtual orifice" or "gas orifice" 120 with rapidly oscillating shape - which assists mixing and atomization. The external convergence means that a radial-inwards component exists to the supersonic flow, and this increases the penetration of the blast gas (or "secondary fluid") or against the fuel jet (the "primary fluid"), enabling much less secondary fluid mass rate to be used to achieve similar effect. This overcomes the poor energy efficiency suffered in general by direct-injection blast atomisers, even to the extent of also beating single-fluid atomiser energy efficiency. "Convergent" in this context refers to the overall direction of the flow converging upon the axis of symmetry and the slurry fluid jet there.

The angle of convergence of the blast stream - ie the angle α in Figure 4, the angle between the median core in the stream and axis 11 - is preferably in the range 5-90°, more preferably 30-85°, most preferably 40-80°. A suitable angle is thought to be about 75°. In general, the angles of face portion 30 and surface 40, and therefore the angle of convergence of the blast stream, together with the mass flow rate, should be optimised for the properties of the fuel and the purpose of the spray. However there is a trade-off between atomisation efficiency due to the steepness, and spray penetration. Different engine combustion chamber geometries will require different degrees of spray penetration, so the optimal approach angle will vary. It is also desirable to avoid excessive backwash of fuel across the face of nozzle 15.

The triangular region between the supersonic flow region and the axis contains a vortex, which tends to throw some fuel up into the supersonic flow. This eddy effect combines with the pinch effect to create the "virtual nozzle". The viscoelastic property of the fuel causes such eddies before and after step changes in flow area, such as for plain orifice nozzles.

The overall nature of the blast stream flow has extremely high turbulence energy, as the flow becomes transonic upon convergence with the axis of symmetry. The dynamic pressure of the supersonic flow delivered prior to the change in character to transonic flow maximises both the impact pressure against the slurry fuel as well as the sonic turbulence energy. This happens externally, and converts the secondary flow from a supersonic flow to a transonic one upon meeting the primary fluid.

This is in contrast to an atomiser such as that described in US patent 5,044,552, which retains supersonic flow downstream of interaction, intending instead to cause atomization primarily by shear stripping/acceleration. The downside to the latter intent is the much higher (minimum of 1.5x to 3x secondary mass flow Vs primary mass flow, as mentioned in US patent 5,044,552) consumption of secondary fluid. The present atomiser is capable of achieving complete breakup of the fluid with less than a 1:1 mass flow ratio, thereby minimizing the energy required to produce the secondary fluid, a requirement that with designs such as that of US patent 5,044,552 is known to reduce the overall efficiency of the engine to an unacceptable degree. Such internal mixing designs were discarded in the 1920's by the diesel engine industry, for this reason and to avoid the extra complexity of an attendant blast gas system.

The illustrated atomiser retains "supersonic" flow only before the axial-convergence/collision with the primary fluid, because the mixture of gas, droplets of liquids and particles means that the local "speed of sound" is extremely retarded relative to its measure in a pure material. This tends to confine the turbulence energy to the spray, which tends to maximise entropy production by mixing the three materials together. Under these conditions, the flow becomes transonic/subsonic very rapidly relative to the lower speed of sound. Its energy is rapidly dissipated into mixing and heating in a distinctly non-isentropic way.

Further downstream, the mixture undergoes limited expansion, making a spray pattern with an odd wine-glass like profile, as the (underexpanded - still at higher density than surrounding gas) secondary fluid completes its expansion at the new, slow sonically-limited speed, causing further separation of the particles/droplets within the spray.

Judging from this behaviour, it appears that the local speed of sound within the spray is on the order 70..100 m/s, as the body of the spray never penetrates much faster than ~50 m/s, and the maximum expansion angle of the sides of the spray would be much wider were faster expansion possible.

In summary, the atomised injector of Figures 1 to 4 is supersonic only for the purpose of maximizing dynamic pressure prior to using this energy as a convergent air-blade/gas orifice/external mixing atomiser. In this way it more efficiently utilizes the energy in the slurry fuel, or secondary fluid, allowing the mass quantity and thus the production energy to be conserved. The region where isentropic flow theory is valid is only that region along the flow of the secondary fluid until it loses purity by mixing. Downstream of this the flow is "supersonic" only relative to the retarded speed of sound within the spray plume, and the flow is not isentropic, due to the mixing process.

In the absence of primary fluid, the flow is supersonic down to the convergence region external to the nozzle, and then becomes characteristic of a transonic flow, exhibiting extremely large pressure and velocity fluctuations and producing a vortex street about the flow. In contrast to the nozzle of US patent 5,044,552 it is much less efficient at creating axially-aligned high velocity flow and so less efficient at accelerating the spray plume. This trade off allows better operation as an atomiser, in contrast to typical one dimensional rocket nozzle design, where the objective is to maximise the axis parallel velocity, and where those skilled in that art would normally always avoid convergent supersonic flow, because it is known to always result in a loss of supersonic velocity downstream.

The area ratio of restriction 26 to that of the flow cross section just prior to intersection with the fuel jet is specified by the isentropic flow relations. These equations are solved for the worst case (the highest combustion chamber pressure during the required injection event) only, such that at this design condition the flow is supersonic, and the flow rate of the blast gas is fixed to a ratio of that of the fuel, which itself is dictated by the engine fuel injection rate requirements.

At this worst case design conditions, a normal shock is expected to form at or near the fuel jet, causing a sudden increase in entropy and heat, as well as providing further atomisation energy by virtue of the instability of the shock as it interacts with the fuel fluid surface. The mechanism of fuel break up is due to the dynamic pressure of the blast gas impinging on the fuel jet surface, and the instability of the system causes violent oscillations to further provide energy to disintegrate the fluid.

At conditions of lower chamber pressure than the nozzle design pressure, the convergent-divergent geometry provides an even higher Mach number condition and a further increase in energy available to atomisation.

Compared to boiler applications which operate at atmospheric pressure, the high combustion chamber pressure causes the expanded (supersonic, pre shock) density of the blast gas to exceed that of air at atmospheric pressure by two orders of magnitude. Boiler atomisers therefore do not gain this kinetic energy density advantage.

The cross sectional area of the fuel jet is chosen so that the fuel fluid velocity is relatively low at the desired peak flow rate, to substantially reduce wear through this orifice.

This arrangement provides increased atomisation with reduced mass flow rate of blast gas and without the need for high slurry velocities through the nozzle orifice(s).

It should be noted that the aforementioned isentropic nozzle flow design equations are usually expressed from the point of view towards the design of rocket nozzles, where the final pressure is at atmospheric pressure, and is expected to reduce towards vacuum during flight. Care must be taken when considering the present invention, as final pressure will start at the compression pressure of the engine, and may proceed towards the full combustion pressure, hence requiring a proportionally larger blast gas supply pressure to maintain sufficient atomisation performance. Also, in rocket design the "combustion chamber" is upstream of the convergent-divergent nozzle, whereas in the present invention it is downstream.

The design equations are solved so as to consider the cross section of the blast flow as fully expanded just as this flow intersects with the surface forming the fuel jet boundary. Note that in the annular duct case, the fully expanded flow cross section surface is an annular portion of a cone coaxially aligned with the nozzle, with the apex pointed back into the fuel orifice. The surface of the fuel jet is cylindrical. The fully expanded supersonic flow cross section surface therefore first intersects the fuel jet surface at a line, and mixing proceeds downstream as the mass flows interact.

Note also that as is standard procedure for the design of rocket nozzles, ideally the flow area of the supersonic blast gas increases linearly along the flow from the throat (minimum area) to the fully expanded area at the first intersection with the fuel flow. This condition requires that the walls of the supersonic duct are flat sections only for the slotted jet arrangement; in the annular embodiment the duct profiles will instead be parabolic sections.

Whilst in its simplest form the present invention would be arranged to operate in supersonic mode for the entire injection event to maximise the overall efficiency of atomisation, for many fuel and engine combinations the effective blast pressure can be set such that automatic transitioning between supersonic and subsonic flow conditions provides inherent control of the combustion rate or heat release rate to avoid exceeding the maximum desired cylinder pressure. For example if the cylinder pressure at the start of fuel injection is 14 MPa, and the maximum desired cylinder pressure is 15 MPa, the blast gas pressure at the nozzle would be set to approximately 30 MPa. This would provide supersonic flow conditions at the start of injection resulting in fine atomisation, a short ignition delay and rapid pressure rise. As soon as the cylinder pressure exceeds 15 MPa, the atomisation pressure ratio for the blast gas will decrease below the nominal 2:1 ratio for supersonic conditions and become trans sonic or subsonic causing coarser atomisation, a lower heat release rate, a decrease in cylinder pressure, or a decrease in the rate of rise of the cylinder pressure. Conversely, if the cylinder pressure drops below 15 MPa during the injection event, supersonic flow conditions will automatically resume providing a step increase in the fineness of atomisation and a corresponding decrease in the ignition delay and increase in combustion rate to restore the cylinder pressure. This self-regulating feature of the present invention is thereby advantageous in maintaining the maximum allowable cylinder pressure for a longer period during the combustion event, and with reduced risk of mechanical overload from cylinder pressure spikes due to ignition delay from poorly atomised and mixed fuel. This positive feedback will also reduce the risk of late burning from poorly atomised fuel. These effects will provide increased engine output and efficiency.

Blast atomisation was investigated during the earlier mentioned USDOE program of 1977-94, and is reported by Nelson and Zimperman (1986) for work performed under DOE/MC/21100-2078. This work was based on promising results with air blast atomisation obtained by the South West Research Institute (SWRI) in 1982. This work was based on SWRI's claim that pressure atomisation in engines was NOT feasible. However, SWRI only used a blast air pressure of 75 bar, which when this was used for injection into the engines used for the latter tests (peak compression pressure of around 55 bar) engine injection would have had a pressure ratio of only 1.3:1, insufficient for supersonic conditions. The SWRI work was investigated further by the Energy and Environmental Research Corporation. Despite extensive effort by the EERC, including the use of an air supply at 1600 psi (107 bar) (producing a pressure ratio somewhat less than 2:1 upstream of the air nozzle throat), they also gave up on blast atomisation and focussed work on pressure atomisation. In all cases there was NO acknowledgement of the benefits of achieving supersonic flow. Overall, over 90% of the effort in prior coal engine work was devoted to achieving effective atomising, and yet air blast atomisation was rejected and without realisation of the requirement for supersonic conditions.

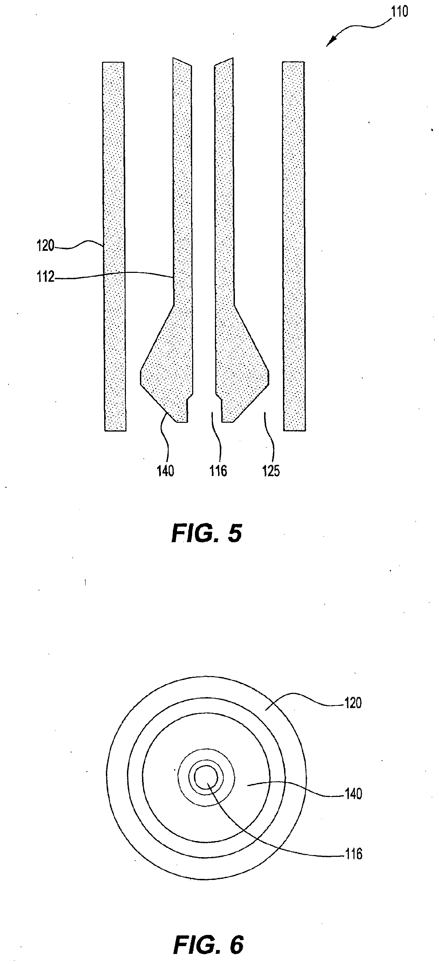

Figures 5 and 6 depict a simpler form 110 not according to the claimed invention, of the embodiments of Figures 1 to 4 in which the undercut convergent feature of the outer sleeve is omitted, and the sleeve 120 is a straight cylinder. The axial convergence of the blast gas stream is still facilitated by the conical or pyramidal end surface 140 of the central tube 112.

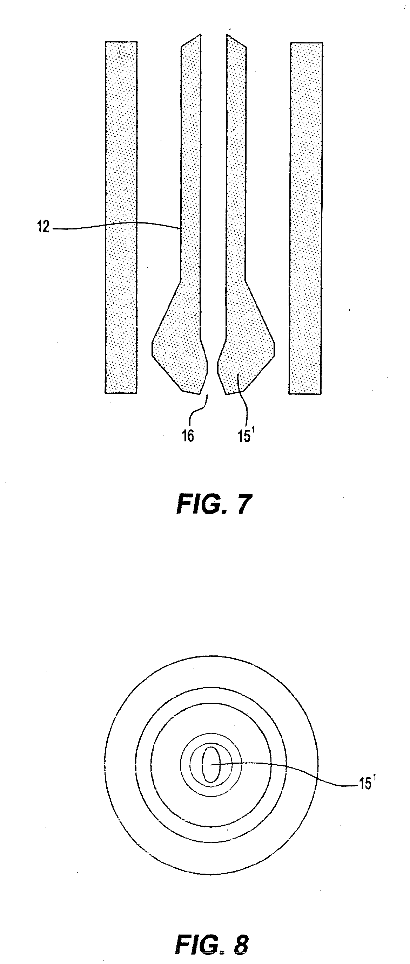

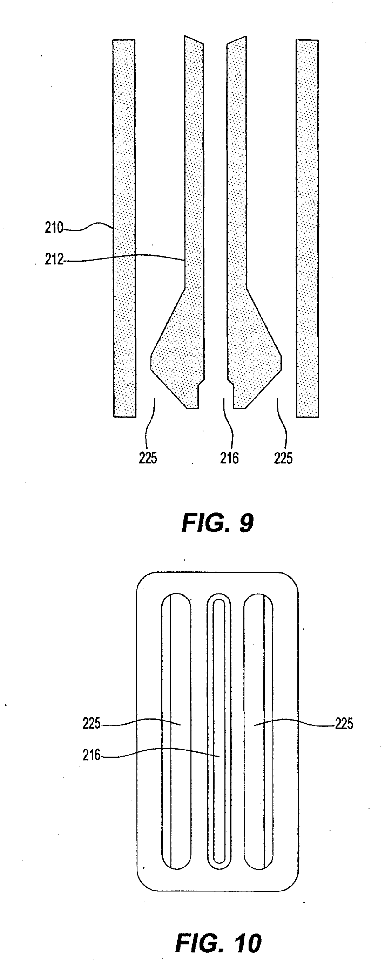

A range of modifications can be used to optimise the injection performance of the atomiser by achieving the desired degree of atomisation, atomised fuel jet shape and velocity, minimising blast gas consumption for a given flow of coal water slurry fuel, generally improving atomisation quantity, minimising poor atomisation quality at the beginning and end of each injection process, minimising component wear - particularly those in contact with the coal water slurry fuel - to improve overall injector longativity and reliability. Exemplary illustrated disclosures include:
- A fan-jet orifice 15¹ in the outlet 16 of the slurry tube 12 to shape the liquid slurry jet into a flat fan is shown in Figures 7 and 8. This provides a thinner liquid film to assist the atomisation process.
- A slotted atomiser injector 210 (Figures 9 and 10) comprising substantially flat slots 216, 225 for both the slurry fluid and the blast gas outlets to give increased interaction between the supersonic wave and gas and therefore increased atomisation. Central tube 212 is now of elongate cross-section, as are the pair of blast gas outlets 225 to the respective sides of slurry slot 216.
- The use of multiple orifices to further improve blast gas interaction with the fuel jet(s), to control jet shape, and increase nozzle capacity; for example, multiple coaxial orifices or stacked slotted orifices.
- The use of pneumatic or hydraulic pistons to provide cut-off valve force (in place of springs) to improve rotation of the moving valve seat which provides more uniform valve seat wear and a longer valve life.

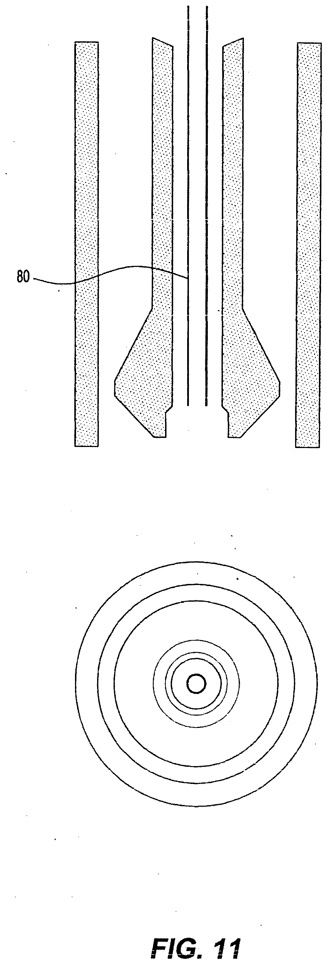

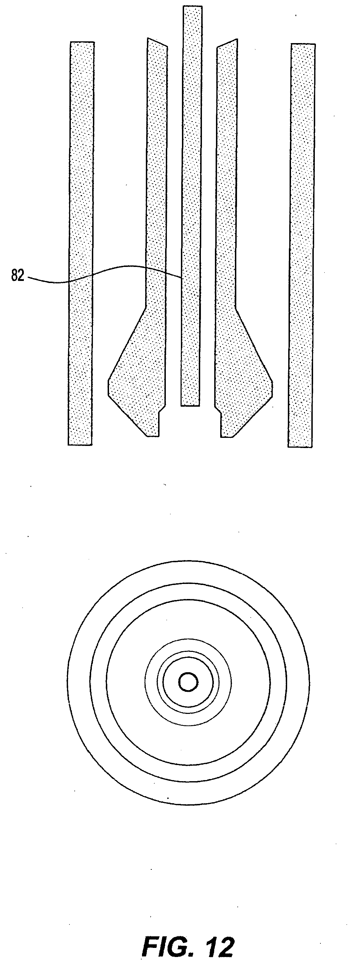

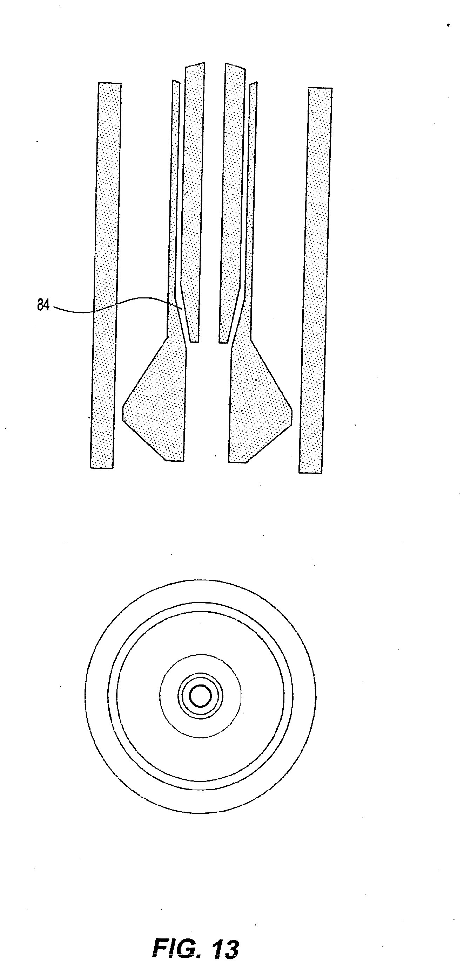

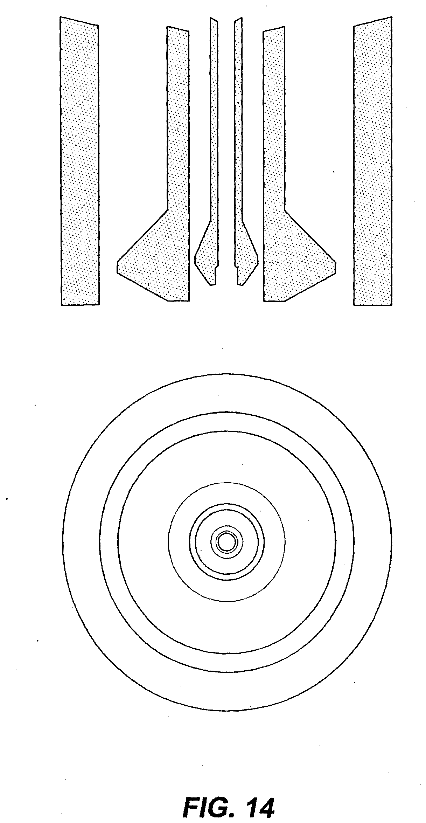

Various disclosures of a coal slurry nozzle may also be used to assist in atomisation by either providing partial pre-atomisation or generating other instabilities in the coal slurry stream. Examples include a small central gas jet 80, as depicted in Figure 11, a turbulence device 82 (Figure 12), an internal mixing pre-atomiser as shown in Figure 13 in which, to avoid nozzle wear, an initial low level of blast gas is introduced for the pre-atomisation step via an annular duct 84 prior to the main slurry exit nozzle 16, and an external mixing pre-atomiser as shown in Figure 14.

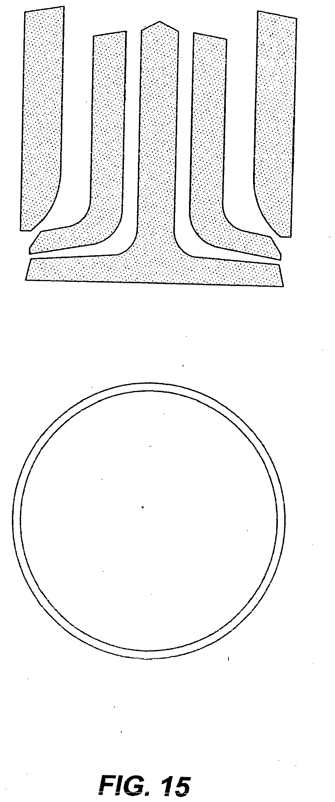

In a further disclosure, the outlet of the slurry tube and blast gas annular orifices are created by poppet shaped nozzles. This arrangement is constructed to shape the liquid slurry jet and the supersonic blast gas into a radially disposed fan around the axis of the valve is shown in Figure 15. The poppet seats may be advantageously be constructed with grooves or raised ribs to define the orifice gap and provide control of the jet swirl. This arrangement of the supersonic blast atomiser provides a 360° atomised fan. The arrangement also provides a thin liquid slurry film to assist the atomisation process. This arrangement has particular advantages in engines where the fuel injection positioned nearer the centre of the cylinder centre line.

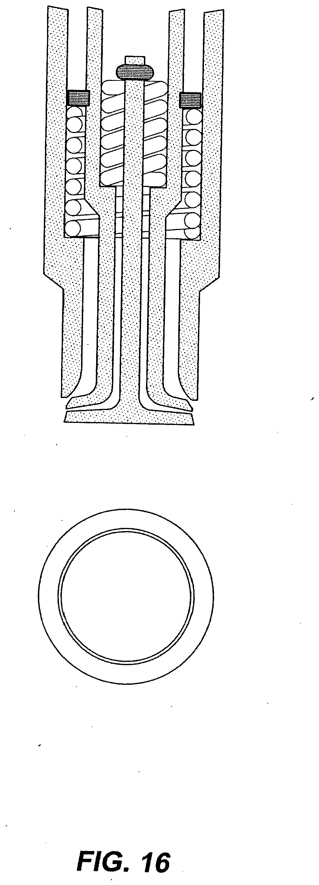

A poppet-type configuration as described above, but where the co-axial poppets are operated as tandem valves to control the release of the blast gas and/or the coal water slurry fuel, is shown in Figure 16. This arrangement has further advantages of combining the function of atomiser and cut-off valves/needle valves for the blast gas and/or slurry fuel.

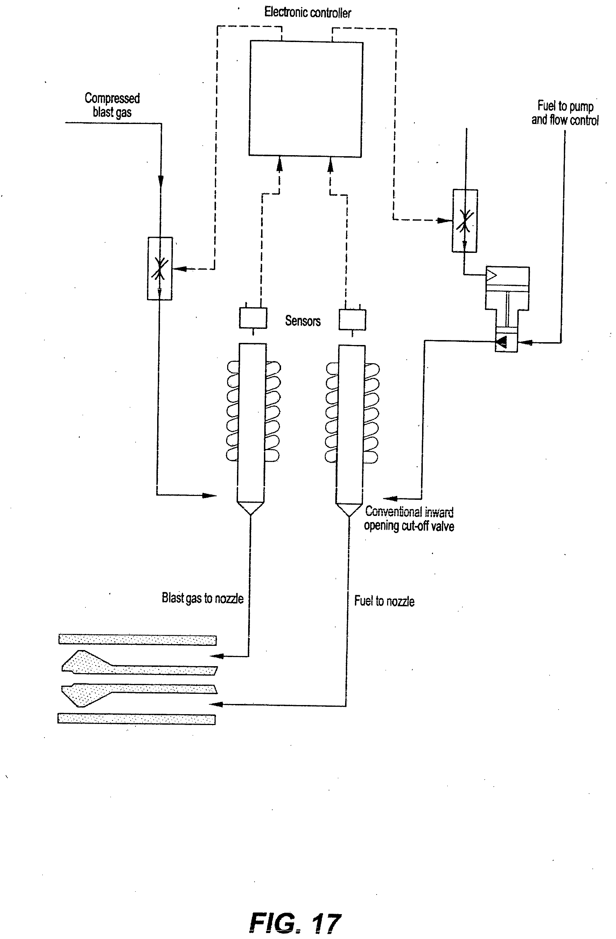

There may be provision for electronically controlled timing of the injection rate and duration of the slurry fluid with the blast gas rate and duration to provide the optimal mass flow of blast gas relative to the slurry fluid flow rate, and to minimise blast gas consumption. This arrangement can also optimise the fuel flow rate during the early part of injection to avoid chilling the charge air. This disclosure is shown schematically in Figure 17.

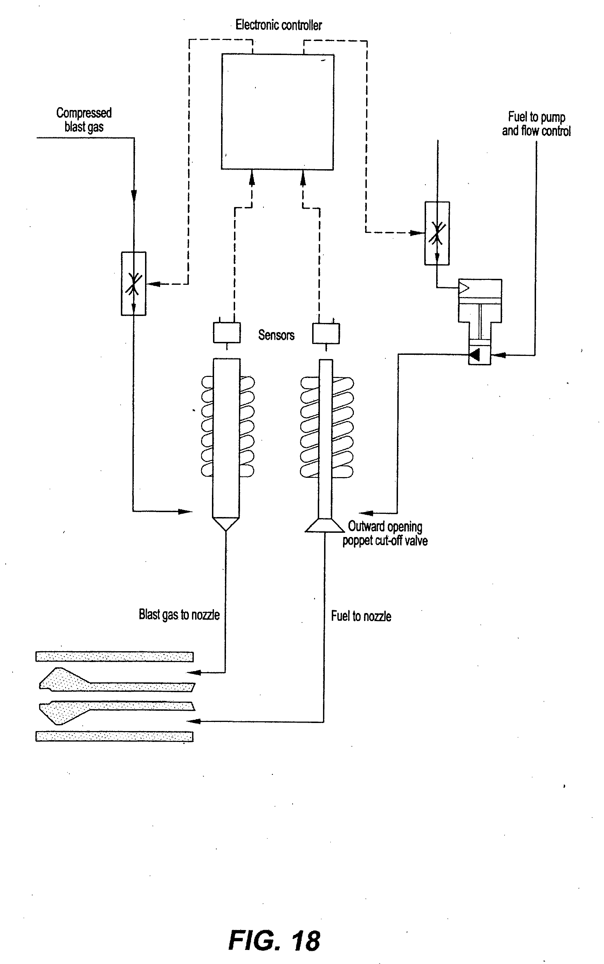

To further reduce injector wear, a disclosure comprising an outwardly opening fuel cut-off valve, is as shown in Figure 18. With this disclosure the valve seating force provided by a spring or hydraulic or compressed gas piston can be substantially reduced compared to that required by an inward opening valve, thereby reducing slurry throttling across the valve seat. This substantially reduces seat wear and enabling the life of the injector components to match that of the supersonic atomising nozzle.

## Claims

1. A particulate slurry fuel atomiser injector (10) comprising:
a central tube (12) terminating in a first outlet (16) for emitting a jet of particulate slurry fuel along a central axis (11); and
structure (20) adjacent to the central tube (12) so as to define with the central tube (12) a duct means (22) communicating with one or more second outlets (25) for blast gas about said first outlet (16),
**characterised in that** said duct means (22) is configured to accelerate the blast gas to a blast stream of supersonic velocity that emerges from the second outlet(s) (25); and **in that** adjacent the second outlet(s) (22) an undercut internal face or faces (30) of said structure (20) opposed to a surface of the central tube (12) are axially convergent arranged to direct the emergent supersonic blast stream into the jet of particulate slurry fuel downstream of the first outlet (16), thereby atomising the fuel downstream of the first outlet (16),
wherein said structure (20) surrounds the central tube (12) whereby said one or more second outlets (25) comprise an annular outlet about the first outlet (16), and said undercut internal face or faces (30) of said structure (20) adjacent the second outlet (25) comprise a continuous marginal face portion (30) adjacent the second outlet (16),
and wherein said opposed surface of the central tube (12) comprises a conical or pyramidal end surface (40) of the central tube (12) opposed to said continuous marginal face portion (30) for further facilitating said directing of the emergent supersonic blast stream into the jet of particulate slurry fuel downstream of the first outlet (16).

2. A particulate slurry fuel atomiser injector (10) according to claim 1, wherein the internal face(s) (30) and the end surface(s) (40) are such that in operation the angle of convergence of the blast stream with respect to said central axis (11) is in the range 5-90°, preferably 30-85°, more preferably 40-80°.

3. A particulate slurry fuel atomiser injector (10) according to claim 1 or 2, wherein said internal face or faces (30) adjacent the second outlet (25) are at least partially curvilinear and concave in the direction of flow of the blast gas.

4. A particulate slurry fuel atomiser injector (10) according to claim 1 or 2, wherein said internal face or faces adjacent the second outlet are generally straight in the direction of flow of the blast gas.

5. A particulate slurry fuel atomiser injector (10) according to any one of claims 1 to 4, wherein the duct means (22) is configured to accelerate the blast gas by means of a restriction arrangement (26) that is smoothly convergent - divergent in the direction of flow of the blast gas.

6. A particulate slurry fuel atomiser injector (10) according to any one of claims 1 to 5, wherein the first outlet (16) is generally circular and the supersonic blast stream is of annular cross section.

7. A particulate slurry fuel atomiser injector (10) according to any one of claims 1 to 6, wherein the first outlet (16) is elliptical or elongate in cross section whereby the jet of particulate slurry fuel is a fan jet.

8. A particulate slurry fuel atomiser injector (10) according to any one of claims 1 to 5 and 7, wherein the first outlet (16) is an elongate slot and the one or more second outlets (25) comprise a pair of slots to opposite sides of, and generally parallel to, the first outlet (16).

9. Combustion apparatus comprising:
structure defining a combustion chamber; and
a particulate slurry fuel atomiser injector (10) according to any one of claims 1 to 8, positioned and configured to inject particulate slurry fuel into the combustion chamber and to atomise the fuel with the accompanying blast stream.

10. Combustion apparatus according to claim 9, configured to operate as a compression ignition or diesel engine.

11. A method of operating a diesel engine fitted with a particulate slurry fuel injector configured to inject fuel into the combustion chamber of the engine from a first outlet (16) that terminates a central tube (12) with an accompanying blast of gas that emerges from one or more second outlets (25) and atomises the fuel downstream of the first outlet (16), **characterised in that** said method includes injecting the fuel as a particulate slurry fuel and, converging the blast with an undercut internal face or faces (30) adjacent the second outlet(s) opposed to a surface of the central tube (12) to impinge on the fuel in the combustion chamber whereby to atomise the fuel therein for compression ignition,
wherein said one or more second outlets (25) comprise an annular outlet about the first outlet (16), and said undercut internal face or faces (30) of said structure (20) adjacent the second outlet (25) comprise a continuous marginal face portion (30) adjacent the second outlet (16), and said opposed surface of the central tube (12) comprises a conical or pyramidal end surface (40) of the central tube (12) opposed to said continuous marginal face portion (30) for further facilitating said directing of the emergent supersonic blast stream into the jet of particulate slurry fuel downstream of the first outlet (16),
and wherein the blast of gas is supplied via a restriction and the gas pressure upstream of the restriction is at least allows 2:1 of the pressure in the combustion chamber, whereby the blast of gas is at a supersonic velocity.

12. A method according to claim 11 wherein, said gas pressure upstream of the restriction is at least about 30MPa.

## Patentansprüche

1. Atomisierer-Einspritzer (10) für partikelförmigen Brennstoffschlamm, Folgendes umfassend:
eine mittlere Röhre (12), welche in einem ersten Auslass (16) zum Emittieren eines Strahls von partikelförmigem Brennstoffschlamm entlang einer mittleren Achse (11) endet; und
eine an die mittlere Röhre (12) angrenzende Struktur (20) zum Definieren eines Leitungsmittels (22) mit der mittleren Röhre (12), welches mit einem oder mehreren zweiten Auslässen (25) für Ausblasegas um den ersten Auslass (16) kommuniziert,
**dadurch gekennzeichnet, dass** das Leitungsmittel (22) konfiguriert ist, um das Ausblasegas auf einen Ausblasestrom mit Überschallgeschwindigkeit zu beschleunigen, welcher aus dem zweiten Auslass/den zweiten Auslässen (25) austritt; und dadurch, dass angrenzend an den zweiten Auslass/die zweiten Auslässe (22) eine hinterschnittene innere Seite oder hinterschnittene Seiten (30) der Struktur (20), welche einer Fläche der mittleren Röhre (12) zugewandt sind, axial konvergierend angeordnet sind, um den austretenden Überschall-Ausblasestrom in den Strahl von partikelförmigem Brennstoffschlamm im nachgelagerten Bereich des ersten Auslasses (16) zu leiten, wodurch der Brennstoff im nachgelagerten Bereich des ersten Auslasses (16) atomisiert wird,
wobei die Struktur (20) die mittlere Röhre (12) umgreift, wodurch der eine oder die mehreren zweiten Auslässe (25) einen ringförmigen Auslass um den ersten Auslass (16) umfassen, und wobei die hinterschnittene(n) innere(n) Fläche oder Flächen (30) der an den zweiten Auslass (25) angrenzenden Struktur (20) einen durchgehenden Rand-Seitenabschnitt (30) angrenzend an den zweiten Auslass (16) umfassen,
und wobei die gegenüberliegende Fläche der mittleren Röhre (12) eine konische oder pyramidale Endfläche (40) der mittleren Röhre (12) gegenüber dem durchgehenden Rand-Seitenabschnitt (30) zum zusätzlichen Erleichtern des Leitens des austretenden Überschall-Ausblasestroms in den Strahl aus partikelförmigem Brennstoffschlamm im nachgelagerten Bereich des ersten Auslasses (16) umfasst.

2. Atomisierer-Einspritzer (10) für partikelförmigen Brennstoffschlamm nach Anspruch 1, wobei die innere(n) Seite(n) (30) und die Endfläche(n) (40) so gestaltet sind, dass im Betrieb der Konvergenzwinkel des Ausblasestroms in Bezug auf die mittlere Achse (11) in dem Bereich von 5 bis 90°, vorzugsweise 30 bis 85° und noch bevorzugter Weise 40 bis 80° liegt.

3. Atomisierer-Einspritzer (10) für partikelförmigen Brennstoffschlamm nach Anspruch 1 oder 2, wobei die an den zweiten Auslass (25) angrenzende(n) innere Seite oder inneren Seiten (30) mindestens teilweise gekrümmt und konkav in der Strömungsrichtung des Ausblasegases sind.

4. Atomisierer-Einspritzer (10) für partikelförmigen Brennstoffschlamm nach Anspruch 1 oder 2, wobei die an den zweiten Auslass angrenzende(n) innere Seite oder inneren Seiten allgemein gerade in der Strömungsrichtung des Ausblasegases sind.

5. Atomisierer-Einspritzer (10) für partikelförmigen Brennstoffschlamm nach einem der Ansprüche 1 bis 4, wobei das Leitungsmittel (22) konfiguriert ist, um das Ausblasegas mithilfe einer Einschnürungsanordnung (26) zu beschleunigen, welche stufenlos konvergierend - divergierend in der Strömungsrichtung des Ausblasegases ist.

6. Atomisierer-Einspritzer (10) für partikelförmigen Brennstoffschlamm nach einem der Ansprüche 1 bis 5, wobei der erste Auslass (16) allgemein kreisförmig ist und der Überschall-Ausblasestrom einen ringförmigen Querschnitt aufweist.

7. Atomisierer-Einspritzer (10) für partikelförmigen Brennstoffschlamm nach einem der Ansprüche 1 bis 6, wobei der erste Auslass (16) einen elliptischen oder länglichen Querschnitt aufweist, wodurch der Strahl von partikelförmigem Brennstoffschlamm ein fächerförmiger Strahl ist.

8. Atomisierer-Einspritzer (10) für partikelförmigen Brennstoffschlamm nach einem der Ansprüche 1 bis 5 und 7, wobei der erste Auslass (16) ein länglicher Schlitz ist und der eine oder die mehreren zweiten Auslässe (25) ein Paar Schlitze an gegenüberliegenden Seiten von und allgemein parallel zu dem ersten Auslass (16) umfassen.

9. Verbrennungsgerät, Folgendes umfassend:
eine Struktur, welche eine Verbrennungskammer definiert; und
einen Atomisierer-Einspritzer (10) für partikelförmigen Brennstoffschlamm nach einem der Ansprüche 1 bis 8, welcher positioniert und konfiguriert ist, um partikelförmigen Brennstoffschlamm in die Verbrennungskammer einzuspritzen und den Brennstoff mit dem begleitenden Ausblasestrom zu atomisieren.

10. Verbrennungsgerät nach Anspruch 9, welches konfiguriert ist, um als ein Druckzündungs- oder Dieselmotor zu arbeiten.

11. Verfahren zum Betreiben eines Dieselmotors, welcher mit einem Einspritzer für partikelförmigen Brennstoffschlamm ausgerüstet ist, welcher konfiguriert ist, um Brennstoff in die Verbrennungskammer des Motors aus einem ersten Auslass (16) einzuspritzen, welcher eine mittlere Röhre (12) beendet, mit einem begleitenden Gasschub, welcher aus einem oder mehreren zweiten Auslässen (25) austritt und den Brennstoff im nachgelagerten Bereich des ersten Auslasses (16) atomisiert,
**dadurch gekennzeichnet, dass** das Verfahren das Einspritzen des Brennstoffs als einen partikelförmigen Brennstoffsschlamm und Konvergieren des Schubs mit einer hinterschnittenen inneren Seite oder mit hinterschnittenen inneren Seiten (30) einschließt, welche an den zweiten Auslass/die zweiten Auslässe angrenzt/angrenzen, welche(r) einer Fläche der mittleren Röhre (12) gegenüber liegt/liegen, um auf den Brennstoff in der Verbrennungskammer zu treffen, wodurch der darin befindliche Brennstoff zur Druckzündung atomisiert wird,
wobei der eine oder die mehreren zweiten Auslässe (25) einen ringförmigen Auslass um den ersten Auslass (16) umfassen, und die hinterschnittene(n) innere(n) Seite oder Seiten (30) der an den zweiten Auslass (25) angrenzenden Struktur (20) einen durchgehenden Seiten-Randabschnitt (30) angrenzend an den zweiten Auslass (16) umfasst/umfassen, und wobei die gegenüberliegende Fläche der mittleren Röhre (12) eine konische oder pyramidale Endfläche (40) der mittleren Röhre (12) gegenüber dem durchgehenden der Rand-Seitenabschnitt (30) zum zusätzlichen Erleichtern des Leitens des austretenden Überschall-Ausblasestroms in den Strahl aus partikelförmigem Brennstoffschlamm im nachgelagerten Bereich des ersten Auslasses (16) umfasst,
und wobei der Gasschub über eine Einschnürung zugeführt wird und der Gasdruck im vorgelagerten Bereich der Einschnürung mindestens 2:1 des Drucks in der Verbrennungskammer beträgt, wodurch der Gasschub eine Überschallgeschwindigkeit aufweist.

12. Verfahren nach Anspruch 1, wobei der Gasdruck im vorgelagerten Bereich der Einschnürung mindestens ungefähr 30 MPa beträgt.

## Revendications

1. Injecteur atomiseur de carburant contenant des particules en suspension (10), comprenant :
un tube central (12) se terminant dans une première sortie (16) pour émettre un jet de carburant contenant des particules en suspension le long d'un axe central (11), et
une structure (20) adjacente au tube central (12) de façon à définir avec le tube central (12) un moyen de conduit (22) communiquant avec une ou plusieurs secondes sorties (25) de gaz insufflé autour de ladite première sortie (16),
**caractérisé en ce que** ledit moyen de conduit (22) est configuré pour accélérer le gaz insufflé pour former un courant de soufflage d'une vitesse supersonique qui sort de la(des) seconde(s) sortie(s) (25), et, de façon attenante à la (aux) seconde(s) sortie(s) (22), une ou des faces (30) interne(s) décolletée(s) de ladite structure (20) opposée(s) à une surface du tube central (12) sont disposées de façon axialement convergente pour diriger le courant de soufflage supersonique sortant jusque dans le jet de carburant contenant des particules en suspension en aval de la première sortie (16), en atomisant ainsi le carburant en aval de la première sortie (16),
dans lequel ladite structure (20) entoure le tube central (12), moyennant quoi ladite une ou plusieurs secondes sorties (25) comprennent une sortie annulaire autour de la première sortie (16) et ladite(lesdites) face(s) interne(s) décolletée(s) (30) de la dite structure (20) attenantes à la seconde sortie (25) comprennent une partie de face marginale continue (30) attenante à la seconde sortie (16),
et dans lequel ladite surface opposée du tube central (12) comprend une surface d'extrémité conique ou pyramidale (40) du tube central (12) opposée à ladite partie de face marginale continue (30) pour faciliter davantage ladite direction du courant de soufflage supersonique sortant jusque dans le jet de carburant contenant des particules en suspension en aval de la première sortie (16).

2. Injecteur atomiseur de carburant contenant des particules en suspension (10) selon la revendication 1, dans lequel la(les) face(s) interne(s) (30) et la(les) surface(s) d'extrémité (40) sont telles qu'en fonctionnement, l'angle de convergence du courant de soufflage par rapport au dit axe central (11) est de 5 à 90°, de préférence de 30 à 85° et de manière plus préférée de 40 à 80°.

3. Injecteur atomiseur de carburant contenant des particules en suspension (10) selon la revendication 1 ou 2, dans lequel ladite(lesdites) face(s) interne(s) (30) attenantes à la seconde sortie (25) sont au moins en partie curvilignes et concaves dans la direction d'écoulement du gaz insufflé.

4. Injecteur atomiseur de carburant contenant des particules en suspension (10) selon la revendication 1 ou 2, dans lequel ladite(lesdites) face(s) interne(s) attenantes à la seconde sortie sont généralement droites dans la direction d'écoulement du gaz insufflé.

5. Injecteur atomiseur de carburant contenant des particules en suspension (10) selon l'une quelconque des revendications 1 à 4, dans lequel le moyen de conduit (22) est configuré pour accélérer le gaz insufflé au moyen d'un dispositif de restriction (26) qui est convergent - divergent de façon régulière dans la direction de l'écoulement du gaz insufflé.

6. Injecteur atomiseur de carburant contenant des particules en suspension (10) selon l'une quelconque des revendications 1 à 5, dans lequel la première sortie (16) est généralement circulaire et le courant de soufflage supersonique a une section transversale annulaire.

7. Injecteur atomiseur de carburant contenant des particules en suspension (10) selon l'une quelconque des revendications 1 à 6, dans lequel la première sortie (16) est elliptique ou allongée dans sa section transversale, au moyen de quoi le jet de carburant contenant des particules en suspension est un jet plan.

8. Injecteur atomiseur de carburant contenant des particules en suspension (10) selon l'une quelconque des revendications 1 à 5 et 7, dans lequel la première sortie (16) est une fente oblongue et l'une ou plusieurs secondes sorties (25) comprennent une paire de fentes à des côtés opposés de, et généralement parallèles à, la première sortie (16).

9. Appareil de combustion comprenant :
une structure définissant une chambre de combustion, et
un injecteur atomiseur de carburant contenant des particules en suspension (10) selon l'une quelconque des revendications 1 à 8, positionné et configuré pour injecter un carburant contenant des particules en suspension dans la chambre de combustion et pour atomiser le carburant avec le courant de soufflage associé.

10. Appareil de combustion selon la revendication 9, configuré pour fonctionner comme un moteur à allumage par compression ou un moteur diesel.

11. Procédé de fonctionnement d'un moteur diesel muni d'un injecteur atomiseur de carburant contenant des particules en suspension configuré pour injecter du carburant dans la chambre de combustion du moteur à partie d'une première sortie (16) qui se termine par un tube central (12) avec un gaz insufflé associé qui sort d'une ou plusieurs secondes sorties (25) et atomise le carburant en aval de la première sortie (16),
**caractérisé en ce que** ledit procédé inclut l'injection du carburant sous forme d'un carburant contenant des particules en suspension, et la convergence du courant de soufflage avec une ou des faces internes décolletée(s) (30) attenante(s) à la (aux) seconde(s) sortie(s) opposées à une surface du tube central (12) pour entrer en contact avec le carburant dans la chambre de combustion pour atomiser ainsi le carburant contenu dedans pour un allumage par compression,
dans lequel ladite(lesdites) une ou plusieurs seconde(s) sortie(s) (25) comprennent une sortie annulaire autour de la première sortie (16), et ladite(lesdites) face(s) interne(s) décolletée(s) (30) de ladite structure (20) attenantes à la seconde sortie (25) comprennent une partie de face marginale continue (30) attenante à la seconde sortie (16), et ladite surface opposée du tube central (12) comprend une surface d'extrémité conique ou pyramidale (40) du tube central (12) opposée à ladite partie de face marginale continue (30) pour faciliter davantage ladite direction du courant de soufflage supersonique sortant jusque dans le jet de carburant contenant des particules en suspension en aval de la première sortie (16),
et dans lequel l'insufflation de gaz est alimentée via une restriction et la pression de gaz en amont de la restriction est d'au moins 2 : 1 de la pression dans la chambre de combustion, au moyen de quoi l'insufflation de gaz est à une vitesse supersonique.

12. Procédé selon la revendication 11, dans lequel ladite pression de gaz en amont de la restriction est d'au moins environ 30 MPa.
